# EUROPEAN PATENT APPLICATION

(11) **EP 2 865 705 A1**
(43) Date of publication of application: **29.04.2015**
(21) Application number: 13190219.9
(22) Date of filing: 25.10.2013
(51) Int. Cl.: C08J 5/08, C03C 25/28, C03C 25/32, C03C 25/34, C03C 25/36, C03C 25/40, C08J 5/10, C08K 3/22, C08K 3/26, C08K 5/098, C08K 9/06, C08K 13/06

(54) **Process for producing glass fibre reinforced composites**

(71) Applicant: 3B-Fibreglass SPRL, 4651 Battice (BE)
(72) Inventor: Van Hoof, Frédéric, 4651 Battice (BE)
(74) Representative: BiiP cvba

(57) **Abstract**

The present invention concerns a process for the production of injection moulded glass fibre reinforced composites from extruded glass fibre reinforced pellets, said process comprising the following steps:
(A) Providing:
(a) Glass fibres (2) coated with a silane based sizing composition, said silane based sizing composition comprising at least one sizing reactive moiety, A1, A2, , (b)A thermoplastic matrix polycondensate (2) comprising a first matrix reactive moiety, B1, at a first end of the chain and a second matrix reactive moiety, B2, at a second end of the chain, ,
(c) A salt (3) selected among an internal lubricant and a nucleating agent comprising a salt reactive moiety, C, capable of reacting with the at least one sizing reactive moiety, A1, A2, and/or with the first or second matrix reactive moiety, B1, B2, said salt reactive moiety, C, being selected among,
• A metallic cation ,
• An organic portion having a functionality, f = 1, with a reactive moiety selected among the anionic form of a carboxylic group or a hydroxyl group, and
• An inorganic anion such as carbonate or sulphate,

(B) Blending the glass fibres, thermoplastic matrix polycondensate, and salt;
(C) Forming glass fibre reinforced pellets; and
(D) Injection moulding a composite part with a composition comprising the reaction product of said glass fibres, thermoplastic matrix polycondesate and salt

**Characterized in that,** the salt is added to a blend of thermoplastic matrix composite and glass fibres only after the first and/or second matrix reactive moieties, B1, B2, and the at least one sizing reactive moiety, A1, A2, are given time to react together at least partially.

## Description

### Technical Field

The present invention relates to a process for producing short glass fibre reinforced thermoplastic composites. In particular, it concerns a process for producing such composites wherein the matrix comprises a polycondensate and wherein an additive such as an internal lubricant or a nucleating agent is used, said process allowing the reduction of the drop in mechanical properties induced by the addition of such additive.

### Background for the invention

Short glass fibre reinforced thermoplastic composites are advantageously produced by first blending a thermoplastic polymer with short glass fibres in an extruder, drawing a fibre reinforced profile out of a die and chopping said profile to produce fibre reinforced pellets. Said pellets can then be injection moulded to form a glass fibre reinforced composite part. Injection moulding allows the production at high rates of composite parts of quite complex shapes. In order to facilitate demoulding of a part out of the tool, it may be necessary to use a demoulding agent. Since the production rates are too high to envisage applying a demoulding agent onto the surface of the tool before each injection, an internal lubricant is usually added to the matrix. An internal lubricant is a lubricant which is incorporated into a plastic compound or resin prior to processing, as opposed to one which is applied to the mould or die. Examples of internal lubricants are: waxes, fatty acids, fatty acid amines and metallic stearates such as zinc, calcium, magnesium, lead and lithium stearate. The lubricants reduce friction between polymers and metal surfaces, improve flow characteristics and enhance wetting properties of compounds. (cf. http://composite.about.com/library/glossary/i/bldef-i2861 .htm). For example, JP61188457 and JP61097356 disclose a process for manufacturing glass fibre reinforced composites wherein the matrix comprises a polycondensate, such as a polyamide or a polyester, and including the blending thereof with glass fibres and a lubricating agent.

The mechanical properties of such composite materials depend on a number of parameters including fibre length, fibre aspect ratio, molecular weight and degree of crystallinity of the thermoplastic matrix, adhesion force between fibre and matrix, and so on. Although some of the foregoing parameters are mostly material dependent, their optimization is often dependent on process conditions. For example, fibre length is reduced during blending of a thermoplastic polymer and fibres in an extruder, in particular in a twin-screw extruder, because of the high shear forces required for an optimal blending. For this reason, running glass fibres more than once in an extruder is, as far as possible, avoided. Another example of the influence of processing conditions on the optimization of the foregoing parameters is crystallinity. In view of the very high cooling rates undergone by the matrix upon injection thereof into a cooled mould, crystals do not have sufficient time to form. For this reason, a nucleating agent is often used to promote and control crystallization. JP7179753 discloses a process for manufacturing glass fibre reinforced composites wherein the matrix comprises a polyamide, a polyphthalamide, and including the blending thereof with glass fibres and a nucleating agent.

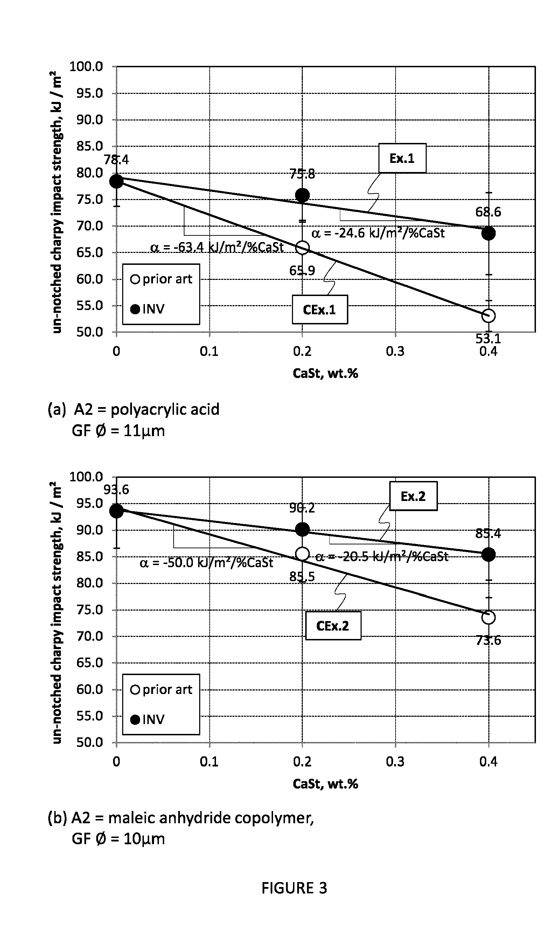

Adding an additive to the a polymeric matrix is very simple, and can be conveniently done in the extruding chamber by blending together thermoplastic matrix, glass fibres and additive. Usually the thermoplastic polymer and a master batch comprising the additives pre-blended with a small amount of thermoplastic polymer are introduced into the extrusion chamber and the glass fibres are thereafter added to the melt. It was observed, however, that the addition of certain additives such as internal lubricants and nucleating agents were detrimental to some mechanical properties such as impact resistance and tensile strength, of glass fibre reinforced composites, in particular when the matrix is a polycondensate such as a polyamide or a polyester (e.g., polyethylene terephthalate (PET), polybutylene terephthalate (PBT)). The white circles in the graph of Figure 3(a) shows the drop in Charpy un-notched impact strength measured according to ISO 179/1eU, on a glass fibre reinforced polyamide 6 (PA6) as a function of content of calcium stearate (CaSt), used e.g., in JP61188457 as internal lubricant and e.g., in JP7179753 as nucleating agent. It can be seen that the un-notched impact strength drops by over 30% when 0.4 wt.% calcium stearate is added. Such drop of course somehow jeopardizes the advantages that the addition of calcium stearate may bring to the composite.

.The present invention proposes a solution for substantially reducing the drop in some mechanical properties of glass fibre reinforced composites wherein the thermoplastic matrix comprises a polycondensate, observed when additives such as an internal lubricant or a nucleating agent are added. This and other advantages are described more in details in the following sections.

### Summary of the invention

The present invention is defined in the appended independent claims. Preferred embodiments are defined in the dependent claims. In particular, the present invention concerns a process for the production of injection moulded glass fibre reinforced composites from extruded glass fibre reinforced pellets, said process comprising the following steps:
(A) Providing:
   (a) Glass fibres coated with a silane based sizing composition, said silane based sizing composition comprising at least one sizing reactive moiety, A1, A2, selected among a carboxylic group, an anhydride group, and epoxy group, an amine group or a isocyanate group,
   (b)A thermoplastic matrix polycondensate comprising a first matrix reactive moiety, B1, at a first end of the chain and a second matrix reactive moiety, B2, at a second end of the chain, said first and/or second matrix reactive moieties, B1, B2, being capable of reacting with the at least one sizing reactive moiety, A1, A2, and are same or different and selected among an amine group, carboxylic group or hydroxyl group,
   (c) A salt selected among an internal lubricant and a nucleating agent comprising a salt reactive moiety, C, capable of reacting with the at least one sizing reactive moiety, A1, A2, and/or with the first or second matrix reactive moiety, B1, B2, said salt reactive moiety, C, being selected among,
      - A metallic cation ,
      - An organic portion having a functionality, f = 1, with a reactive moiety selected among the anionic form of a carboxylic group or a hydroxyl group, and
      - An inorganic anion such as carbonate or sulphate,
(B) Blending the glass fibres, thermoplastic matrix polycondensate, and salt;
(C) Forming glass fibre reinforced pellets; and
(D) Injection moulding a composite part with a composition comprising the reaction product of said glass fibres, thermoplastic matrix polycondesate and salt
**Characterized in that,** the salt is added to a blend of thermoplastic matrix composite and glass fibres only after the first and/or second matrix reactive moieties, B1, B2, and the at least one sizing reactive moiety, A1, A2, are given time to react together at least partially.

The sizing composition comprises a silane coupling agent and preferably a reactive polymer of functionality, f ≥ 2. In preferred embodiment, said at least one sizing reactive moiety, A1, belongs to the silane coupling agent, preferably selected among aminosilanes and epoxysilanes. Alternatively or concomitantly, said at least one sizing reactive moiety, A2, belongs to said reactive polymer of functionality, f ≥ 2, comprising at least two such sizing reactive moieties, A2. Said reactive polymer is preferably selected among an epoxy resin based on bisphenol-A or bisphenol-F, an epoxy phenol novolac (EPN), an epoxy cresol novolac (ECN), a (co-)polymer comprising acrylic and/or methacrylic acid groups, a copolymer of maleic acid or maleic anhydride, a (co-)polymer grafted with maleic acid or maleic anhydride, isocyanate cross-linkers, polyvinylamine and polyethyleneimine.

The matrix comprises a polycondensate. In a preferred embodiment, said polycondensate comprises a polyamide. In this embodiment, the first and second matrix reactive moieties, B1, B2, are an amine group and a carboxylic acid group, respectively. Alternaltively, the polycondensate comprises a polyester, preferably polyethylene terephthalate or polybutylene terephthalate. In this embodiment the first and second matrix reactive moieties, B1, B2, are a hydroxyl group and a carboxylic acid group, respectively.

In a preferred embodiment, the salt is an internal lubricant. It is preferably a metal soap such as calcium-, zinc-, magnesium-, or aluminum-stearate or montanate, preferably the internal lubricant is calcium stearate or montanate. In an alternative embodiment, the organic salt is a nucleating agent, preferably selected among slaked lime (Ca(OH₂)₂), calcium benzoate, sodium benzoate, sodium o-chlorobenzoate, calcium carbonate.

In order to give enough time for the first and/or second matrix reactive moieties, B1, B2, to react at least partially together with the at least one sizing reactive moiety, A1, A2, before adding the salt, the glass fibres and thermoplastic matrix polycondensate may be blended upstream of an extruding screw chamber, and the salt may be added downstream of said extruding screw chamber to produce glass fibre reinforced pellets comprising the reaction product of a blend of glass fibres, thermoplastic matrix polycondensate, and salt. The furthest downstream the salt is added into the extruding screw chamber with respect to the matrix and glass fibres introduction points, the more advanced is the reaction between the first and/or second matrix reactive moieties, B1, B2, and the at least one sizing reactive moiety, A1, A2, and the higher are the mechanical properties.

In an alternative embodiment, the matrix and glass fibres are blended alone in an extruder to form fibre reinforced granules or pellets. These granules are introduced into the screw chamber of an injection moulding machine, and blended therein with a master batch comprising the salt and thermoplastic matrix, in amounts such that a composite part with the desired contents of glass fibres, thermoplastic matrix and additive are produced.

Some mechanical properties of a glass fibre reinforced composite produced with a process according to the present invention may be higher than the ones of a composite material with same components and amounts, wherein the thermoplastic matrix polycondensate and salt are blended prior to adding the glass fibres In particular, the notched or un-notched charpy values measured according to ISO 179/1eA(f) and ISO 179/1eU may be 10% or more higher, or the tensile strength measured according to ISO 527 may be at least 5% higher. In some cases such enhancements are observed on samples tested dry as moulded (DAM) and in some cases the enhancement is more visible after hydrolysis ageing. For example, PA66 maintained at a temperature of 130°C in 50/50 water/ethylene glycol during a time of up to 1000 h, and PET and PBT maintained at a temperature of 110°C in water steam at 1.5 bar for a period of up to 72 h for PET and comprised between 72 and 240 h for PBT.

The present application also concerns a glass fibre reinforced composite obtained by a process as defined above.

The present application also concerns a process for producing glass reinforced pellets, said process comprising the following steps:
(A) Providing glass fibres, a thermoplastic matrix polycondensate, and a salt as defined in any of claims 1 to 6,
(B) blending the glass fibres and thermoplastic matrix polycondensate upstream of a an extruding screw chamber;
(C) blending the salt to the blend of glass fibres and thermoplastic matrix polycondensate obtained in the preceding step, downstream of said extruding screw chamber;
(D) extruding and chopping a profile of glass fibre reinforced thermoplastic matrix polycondensate comprising said organic salt to form glass fibre reinforced pellets.

The present application also concerns glass fibre reinforced pellets obtained by the foregoing process.

### Brief description of the Figures

For a fuller understanding of the nature of the present invention, reference is made to the following detailed description taken in conjunction with the accompanying drawings in which:
**Figure 1** **:** illustrates schematically the extrusion of glass fibre reinforced pellets and injection moulding thereof according to (a) the prior art, (b) and (c) a first and second embodiments of the present invention.
**Figure 2****:** illustrates schematically a model of reactions at the interphase of a glass fibre of a composite according to (a) the prior art, and (b) the present invention.
**Figure 3****:** illustrates charpy impact test values as a function of CaSt content, measured on un-notched composite samples of same composition manufactured according to prior art (white circles) and to the present invention (black circles), (a) with a first glass fibre sized with a first sizing composition, and (b) with a second glass fibre sized with a second sizing composition.
**Figure 4****:** illustrates (a) tensile strength and (b) tensile strain as a function of CaSt content of composites samples of same composition manufactured according to prior art (white circles) and to the present invention (black circles), (a) with the first glass fibre and (b) second glass fibre of Figure 3(a)&(b), respectively.

### Detailed description of the invention

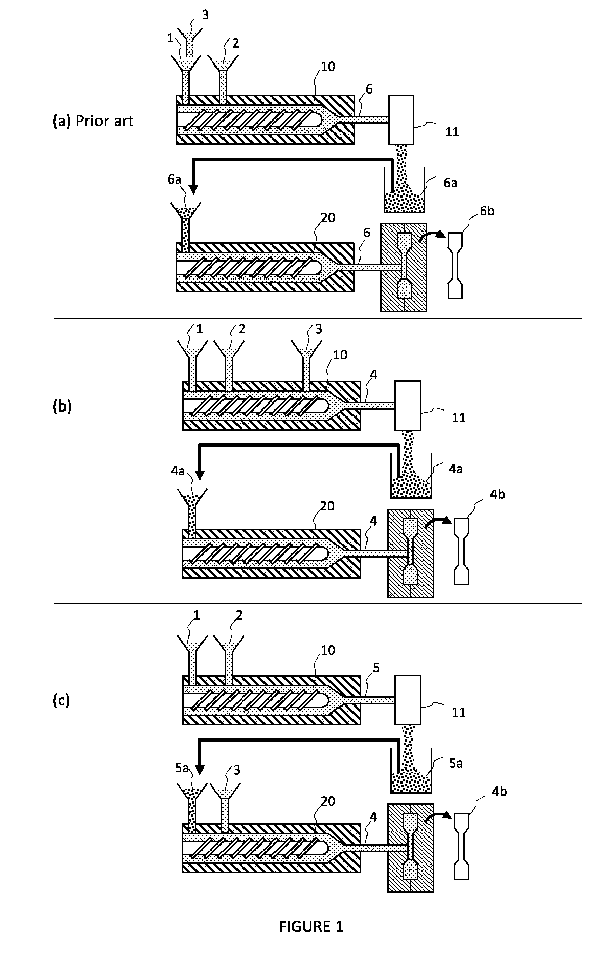

As shown in Figures 1 (a); the most convenient way of blending small amounts of the order of less than 1 wt.% of an additive (3) such as an internal lubricant or a nucleating agent, with a thermoplastic polymeric matrix (1) and glass fibres (2) in the screw chamber of an extruder (10) is to first pre-blend additive (3) and thermoplastic polymer (1) and thereafter blend the mixture with glass fibres (2). The blend (6) thus obtained can then be extruded into a profile and chopped with a cutting apparatus (11) into glass reinforced pellets (6a). Other mixing means than an extruder (10) can be used to blend the various components together, such as a Banbury mixer, high speed mixer, a kneader, etc., but these techniques do not allow the formation of fibre reinforced pellets (6a) which can easily be packed, shipped, and loaded into an injection moulding machine (20) to produce a composite part (6b).

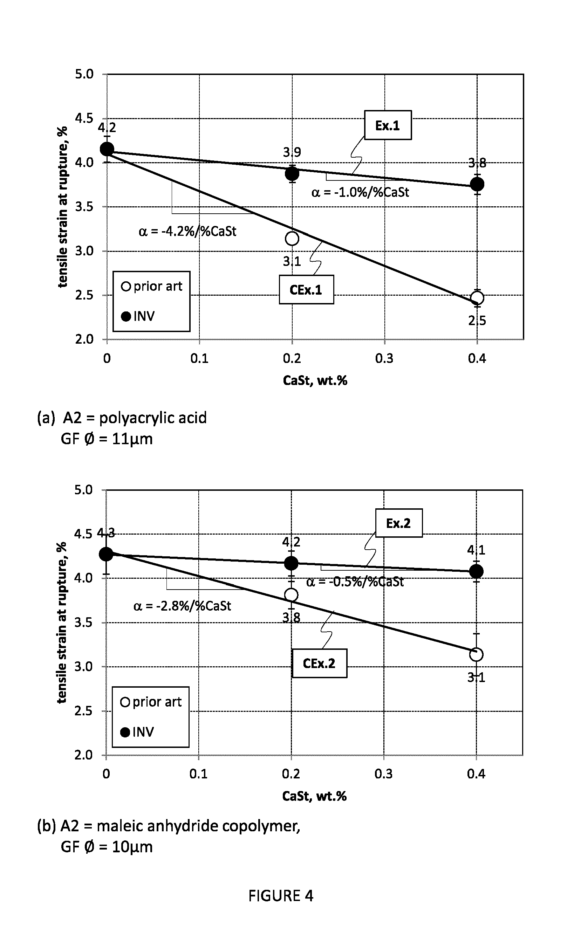

Some properties of glass fibre reinforced composites thus produced, however, seem to drop substantially with increasing amounts of additive. Figures 3 and 4(b) show with the white circles the drop in un-notched impact strength and tensile strain as a function of contents of calcium stearate (CaSt) in a 30 wt.% glass fibre reinforced polyamide 6 (PA6) composite (6b) processed as described above according to the prior art illustrated in Figure 1 (a). The polyamide 6 is a virgin polyamide 6, and the glass fibres are 173X-11P and DS1110-10N available from 3B Fibreglass. It can be seen that the un-notched impact strength drops linearly by over 30% with addition of 0.4 wt.% CaSt, with respect to the total weight of composite. Similarly the tensile strain drops linearly by a little less than 30% with addition of 0.4% CaSt.

Without wishing to be bound by any theory, it is believed that the drop in some mechanical properties observed with the addition of a salt such as calcium stearate to a glass fibre reinforced PA6 composite can be attributed mostly to two phenomena:
(a) neutralisation by said salt (metallic cation and/or anionic part) of sizing reactive moieties, A1, A2, which thus become unavailable for reaction with first and/or second matrix reactive moieties, B1, B2 of the polycondensate polymer, and/or
(b) competition of said salt additive (metallic cation and/or anionic part) with the sizing reactive moieties, A1, A2, in reacting with first and/or second matrix reactive moieties, B1, B2 of the polymer, thus terminating chain extension reaction and preventing any reaction of said matrix reactive moieties with the sizing reactive moieties, A1, A2.

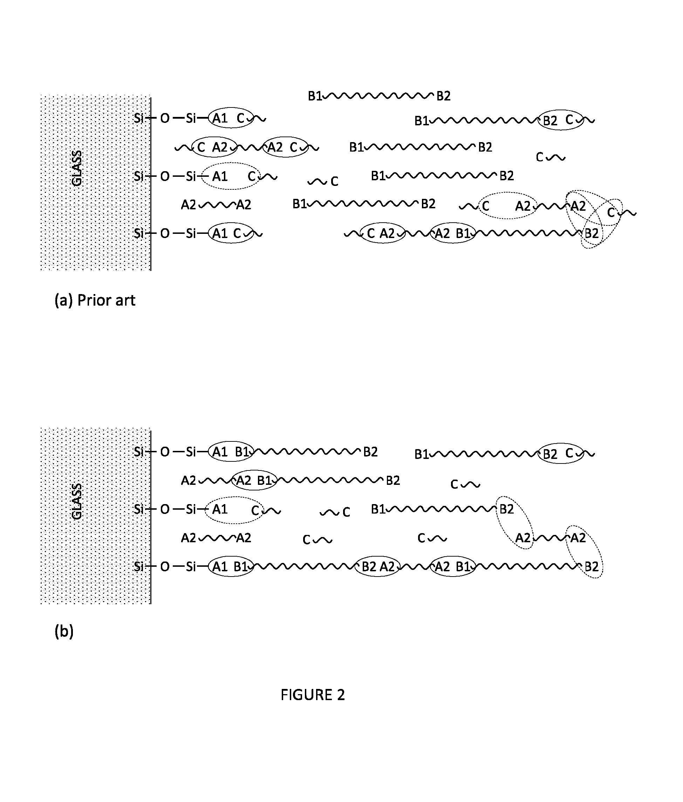

Figure 2(a) illustrates schematically the above two mechanisms. The sizing composition generally comprises an alkoxysilane coupling agent, forming silanols upon hydrolization thereof, which react with the surface of the glass fibres forming an Si-O-Si covalent structure. Silanes with a sizing reactive moiety, A1, are generally used. For example, aminosilanes and epoxy silanes are widely used to this effect, the sizing reactive moiety, A1 : amino-group or epoxy group, respectively, remaining conveniently available for reaction with first and/or second matrix reactive moieties, B1, B2 of the polycondensate polymer and thus forming covalent bonds therewith. The sizing composition generally also comprises a reactive polymer comprising at least two sizing reactive moieties, A2, (i.e., having a functionality, f ≥ 2) which can readily react with the first and/or second matrix reactive moieties, B1, B2 of the polycondensate polymer.

In the best of worlds, first and/or second matrix reactive moieties, B1, B2 of the polycondensate polymer react:
(a) With the sizing reactive moiety, A1, of the silane coupling agent, thus covalently bonding a matrix chain to a glass fibre (cf. circled (A1-Bi) covalent bonds in Figure 2(a) wherein i = 1 or 2; the dotted circles represent moieties getting close enough to start reacting and solid circles represent covalently bound moieties), and
(b) With the sizing reactive moieties, A2, of the reactive polymer; since the latter as a functionality of at least 2, this favours chain extension of the polymeric matrix (cf. circled (A2-Bi) covalent bonds in Figure 2(a) wherein I = 1 or 2).

Unfortunately, the salt added as internal lubricant or as nucleating agent may comprise a salt reactive moiety, C, capable of reacting with the at least one sizing reactive moiety, A1, A2, and/or with the first or second matrix reactive moiety, B1, B2, thus blocking various reactive sites preventing chain extension of the matrix polymeric chains and covalent bonding of the latter to the surface of the sized glass fibres. This translates into a sharp drop of some mechanical properties of a composite material, in particular impact strength and tensile strain at rupture.

The silane coupling agent is preferably an aminosilane or an epoxysilane. The sizing reactive moiety, A1, associated with the silane coupling agent is therefore preferably an amine group or an epoxy group. The reactive polymer of the sizing composition may conveniently be selected among an epoxy resin based on bisphenol-A or bisphenol-F, an epoxy phenol novolac (EPN), an epoxy cresol novolac (ECN), a (co-)polymer comprising acrylic and/or methacrylic acid groups, a copolymer of maleic acid or maleic anhydride, a (co-)polymer grafted with maleic acid or maleic anhydride, isocyanate cross-linkers, polyvinylamine and polyethyleneimine. The sizing reactive moiety, A2, associated with the foregoing reactive polymers are therefore a carboxylic acid and an anhydride group, respectively. In case the reactive polymer comprises polyacrylic acid groups, the cation, Ca²⁺, of calcium stearate, due to its high mobility, will promptly react with a carboxylic acid moiety, A2, of the polyacrylic acid thus neutralizing it and preventing it from reacting with an amine group of a polyamide chain of the matrix and thus restraining the covalent bonding of matrix chains to the glass fibres and stopping chain extension of the polyamide chains. Concomitantly, the stearate anions of calcium stearate enter in competition with the carboxylic acid, A2, of the reactive polymer of the sizing composition, in the reaction with amine groups, B1, of the polyamide matrix. Since said anion has a functionality of 1, such reaction stops chain extension of the polymeric matrix. Because the salt is much more mobile than the polymeric chains and also than the reactive polymer, the diffusion controlled reaction rate of the salt reactive moiety, C, is higher than the one of the other components of the composite. A maleic anhydride copolymer can be used as reactive polymer instead of polyacrylic acid, because it is less sensitive than the latter to salts formation with metallic cations, such as Ca²⁺. However, the competition between said maleic anhydride copolymer and the stearate anion in the reaction with the amine groups of polyamide chains remains important and detrimental to the mechanical properties of the composites thus produced. Beside a carboxylic or an anhydride group discussed above, the sizing reactive moiety, A2, associated with a reactive polymer of the sizing composition may also be an isocyanate group, an epoxy group, or an amine group. Examples of such reactive polymers include:
- epoxy resin, preferably based on any of epoxy bisphenol A or epoxy bisphenol F,
- epoxy phenol novolac and epoxy cresol novolac,
- isocyanate based cross-linker, such as an isocyanurate, biuret and carbodiimide,
- Polyethyleneimine and polyvinylamine.

Based on the above assumption explaining the drop in some mechanical properties of a glass fibre reinforced composite upon addition of an internal lubricating agent or a nucleating agent, the present process was developed and tested showing a substantive reduction of the drop in mechanical properties. The principle of the present invention is quite simple if the above mechanism is verified. It suffices to let some time to the sizing reacting moieties, A1, A2, to react with the matrix reactive moieties, B1, B2, before adding the salt additive. Although still more mobile than the other components, the salt molecules enter into a system wherein most of the reactions between the first and/or second matrix reactive moieties, B1, B2, and the at least one sizing reactive moiety, A1, A2, have already occurred. This situation is schematically represented in Figure 2(b), wherein most salt reactive moieties, C, remain unreacted in solution for lack of reactive sites available.

The present invention applies to composites comprising in the matrix a polycondensate. Polycondensates are meant herein to refer to any kind of polymers formed through a condensation reaction where molecules join together losing small molecules as by-products such as water or methanol, as opposed to addition polymers which involve the reaction of unsaturated monomers. Polycondensates are sensitive to interruption of chain extension by reaction with a salt reactive moiety, C, of a salt. Examples of polycondensates include polyamides, polyesters, and polyacetals. In particular, preferred polycondensate comprise polyamides (PA), preferably aliphatic polyamides such as polyamide 6 (PA6), polyamide 12 (PA12), polyamide 66 (PA66), polyamide 46 (PA46), or semi aromatic PA's like polyphthalamide (PPA). When the polycondensate of the matrix is a polyamide, a first matrix reactive moiety, B1, is an amine group, and a second matrix reactive moiety, B2, is a carboxylic acid group. Alternatively, the polycondensate of the matrix may be a polyester such as polyethylene terephthalate (PET), polybutylene terephthalate (PBT), polyethylene naphthalate (PEN), and the like. Preferably, the matrix polycondensate is PA6, PET, or PBT. When the polycondensate of the matrix is a polyester, a first matrix reactive moiety, B1, is an hydroxyl group, and a second matrix reactive moiety, B2, is a carboxylic acid group.

The additive according to the present invention is an internal lubricant or a nucleating agent. It is preferably a salt comprising a metallic cation, such as calcium, zinc, magnesium, aluminium, lead, boron or lithium. The anion is preferably organic and selected among fatty acids like stearates and montanate. The salt reactive moiety, C, is therefore either a metallic cation, the anionic form of a carboxylic group or a hydroxyl group, or an inorganic anion such as carbonate or sulfate.

and/or an amine group, a carboxylic group, an epoxy group or a hydroxyl group belonging to an organic anionic portion of the salt, having a functionality, f = 1. Preferred internal lubricants are metallic stearates, in particular, calcium stearate (CaSt). Preferred nucleating agents are slaked lime (Ca(OH₂)₂), calcium benzoate, boron nitride, and the like. It is believed that such additives are prompt to react with sizing reactive moieties, A1, A2, and with matrix reactive moieties, B1, B2, according to a mechanism as described above. Such reactions may advantageously be hindered with a process according to the present invention, since most reactive sites between the reactive components of the sizing composition on the glass fibres and the polymeric matrix have already reacted before the additive is added to the fibre / matrix blend.

As illustrated in Figure 1(b)&(c), there are two main industrially implementable solutions to blend a salt additive to the other components of a composite only after the first and/or second matrix reactive moieties, B1, B2, and the at least one sizing reactive moiety, A1, A2, are given time to react together at least partially:
(a) If glass fibre reinforced pellets (4a) comprising the salt additive are desired, than the glass fibres (2) and thermoplastic matrix polycondensate (1) may be blended upstream of an extruding screw chamber (10), and the salt may be added downstream of said extruding screw chamber to produce glass fibre reinforced pellets (4a) comprising the reaction product of a blend of glass fibres, thermoplastic matrix polycondensate, and salt; said pellets (4a) can then be used as such for injection moulding a composite part (4b) comprising the organic additive( 3);
(b) Alternatively, glass fibre reinforced pellets (5a) can be produced without any additive; a salt additive (3) is added to said molten pellets (5) in a screw mixing chamber of an injection moulding machine (20) used for producing a glass fibre reinforced composite part (4b) comprising said additive.

The amounts of salt additive (3) to be added to the glass fibre / matrix blend are of the order of from 0.05 to 5 wt.%, preferably from 0.1 to 2.5 wt.%" more preferably from 0.15 to 0.5 wt.%. For such small amounts, it may be advantageous to introduce the salt additive (3) into the screw chamber of an extruder (10) or of an injection moulding machine (20) as part of a master batch. Preferably, the master batch comprises a blend of the salt additive and a polymer. More preferably said polymer belongs to the matrix. If the matrix comprises one or more additional polymers different from the polycondensate then the master batch preferably comprises said one or more additional polymers, such as to reduce the amounts of reactions between the salt reactive moiety, C, and any matrix reactive moiety present in the master batch. If the matrix is composed solely of polycondensates, then the master batch shall comprise a mixture of the salt additive and at least one polycondensate of the matrix. This solution is still advantageous over the prior art processes wherein the additive is blended with the matrix polymers and glass fibres, because (a) the master batch is exposed to high temperatures much less time than the other components, thus reducing the reaction time, and (b) most sizing reactive moieties, A1, A2, have had time to react with first and/or second matrix reactive moieties, B1, B2, before the master batch is added to the blend, thus attenuating the negative effect of the salt reactive moiety, C. The composition of the master batch must of course be such that the final composite part (4b) comprises the required contents of glass fibres (2), matrix (1), and salt additive (3).

A composite part (4b) produced by a process according to the present invention, two embodiments of which being illustrated in Figure 1(b)&(c) has higher mechanical properties than a composite part (6b) of same composition produced by a process of the prior art illustrated in Figure 1(a), wherein matrix (1); glass fibres (2), and salt additive (3) are added together into a mixing screw chamber of an extruder (10).

### EXAMPLE 1 and COMPARATIVE EXAMPLE 1

Figures 3(a) and 4(a) compare the un-notched impact strength (ISO 179/1eU) and tensile strain at rupture (ISO 527) measured on 30 wt.% glass fibre reinforced polyamide 6 samples having different contents of calcium stearate (CaSt); said samples being produced by a process according to the prior art (white circles = comparative example 1) as illustrated in Figure 1(b) and by a process according to the present invention (black circles = example 1) as illustrated in Figure 1(c). The matrix consists of pure polyamide 6 devoid of any additive. The glass fibres are 11 µm Advantex fibres available from 3B fibreglass. The sizing (173X) comprises a γ-aminopropyltriethoxysilane coupling agent A1100 and a polyacrylic acid. A twin-screw extruder ZSK-26 was used to blend the polyamide and glass fibres and, for the prior art process, the calcium stearate pre-mixed with the polyamide granules. The temperature of the screw mixing chamber of the extruded (10) was maintained at a temperature ranging from 240 and 280°C depending on the position in the screw. Glass fibre reinforced pellets (6a) and (5a) were thus produced with the prior art process (Figure 1(a)) and the present process (Figure 1(c)). Said pellets were introduced into the screw mixing chamber of an injection moulding machine Arburg 420C, with a chamber temperature ranging from 255 and 270°C depending on the position in the screw and a mould temperature of 80°C. For the process according to the present invention, a master batch comprising PA6 and calcium stearate was added to the glass fibre reinforced granules (5a). The melts (6) and (5) were injected into acooled tool to produce a composite part (6b), (4b) according to the prior art and the present invention, respectively. Test samples were cut out of the composite parts and tested in tensile mode and charpy un-notched impact with 0, 0.1, 0.2, 0.3, and 0.4 wt.% calcium stearate. The values of the charpy impact strength and tensile strain are represented as a function of CaSt content in Figures 3(a) and 4(a), respectively.

It can be seen in Figure 3(a) that the un-notched impact strength decreases quite linearly with increasing amounts of CaSt; for the prior art composites, the drop in impact strength is of about 32% for the prior art sample (white circle) from 78.4 kJ / m² with no additive down to 53.1 kJ / m² with 0.4 wt.% CaSt, yielding a slope of -63 kJ / m² / %CaSt. The composite according to the present invention (black circles) also undergo a drop of impact strength with increasing amounts of additive, but said drop is much smaller than for the prior art samples, dropping 12% from 78.4 kJ / m² without additive to 68.6 kJ / m² with 0.4 wt.% CaSt. The slope of the curve is -24.6 kJ / m² / %CaSt, I.e., considerably lower than for the prior art composites. These results seem to comfort our assumption illustrated in Figure 2 of the mechanisms responsible for the drop in mechanical properties when a salt additive is added to a glass fibre / polycondensate matrix blend.

No substantial difference in tensile strength was observed between the composites produced with a process according to the present invention and the ones produced with a process according to the prior art. The tensile strain, however, varied substantially as can be seen in Figure 4. Again, the relationship between tensile strain and CaSt contents is quite linear, with a slope of -4.2 % / %CaSt for the prior art samples, and -1.0 % / %CaSt for the composites according to the present invention. Tensile strain at rupture is very sensitive to matrix-fibre adhesion and, as discussed above, polyacrylic acids are very sensitive to the presence of metallic cations such as Ca²⁺ and react promptly with them. Such reactions leads to the neutralisation of a corresponding number of sizing reactive moieties, A2 = carboxylic acid.

### EXAMPLE 2 and COMPARATIVE EXAMPLE 2

The same test as in Example 1 and Comparative Example 1 described above was carried out with the exception that the glass fibres were replaced by 10 µm Advantex DS1110-10N glass fibres available from 3B Fibreglass, sized with a sizing composition comprising A1100 aminosilane coupling agent and an ethylene-co-maleic acid anhydride reactive polymer. As explained supra, A2 = anhydride groups are less prompt to forming salts with metallic cations such as Ca²⁺ than A2 = carboxylic acid groups. A lower drop in mechanical properties with increasing amounts of CaSt is therefore expected with the present sizing composition than with the sizing composition of Comparative Example 1 comprising a polyacrylic acid as reactive polymer, since no or less neutralisation of the sizing reactive groups A2 = anhydride by reaction with Ca²⁺ is expected. Figures 3(b) and 4(b) illustrate the results of the un-notched charpy tests and of tensile strain in the same conditions as described for (Comparative) Example 1. It can be seen that, as expected, the drop in un-notched charpy impact strength is lower in Comparative Example 2 than in Comparative Example 1, with a drop of the order of 21% (vs about 30% in Comparative Example 1) and a slope of the linear regression of -50 kJ / m² / %CaSt (vs - 63 kJ / m² / %CaSt for Comparative Example 1). The same conclusions can be drawn with respect to the tensile strain results reported in Figure 4(b) with a drop in strain values of 28% for Comparative Example 2 (vs 40% for Comparative Example 1) and a slope of - 2.84% / %CaSt (vs -4.22 % / %CaSt for Comparative Example 1). Beside the influence of the differing glass fibres diameters between (comparative) Examples 1 and 2 (11 µm vs 10 µm)), the drop of mechanical properties observed with a sizing composition comprising an anhydride as sizing reactive moiety, A2, is therefore, according to our proposed model, to be attributed to the competition in reaction with the polyamide matrix reactive moieties between the polyfunctional reactive polymer and the monofunctional stearate.

Table 1 summarizes the materials used and the mechanical properties obtained with the composites of Examples and Comparative Examples 1&2. The difference in mechanical properties in the absence of CaSt between a composite of Example 1 and a composite of Example 2 is to ascribe solely to the larger diameter of 11 µm of the glass fibres used in Example 1 compared with 1 0 µm of the glass fibres used in Example 2. It can be seen from the results listed in Table 1 and plotted in Figures 3&4, that addition of a salt additive (viz., calcium stearate) to the glass fibre / polyamide matrix only after the first and/or second matrix reactive moieties, B1, B2, and the at least one sizing reactive moiety, A1, A2, are given time to react together at least partially (cf. Examples 1&2) allows a substantial decrease in the mechanical properties, in particular charpy impact strength and tensile strain, compared with adding the salt additive together with the glass fibres and polyamide (Comparative Examples 1&2). The results presented in Table 1 and Figures 3&4 were measured on samples dry as moulded (DAM). Preliminary results with a polyester resin (PBT) and a polyamide resin (PA66) suggest that similar conclusions can be drawn with respect to resistance to hydrolysis ageing.

**Table 1: materials and mechanical properties of composites according to Examples and Comparative Examples 1&2**

| | **EX1** | **CEX1** | **EX2** | **CEX2** |
|---|---|---|---|---|
| **Process** | cf. Figure 1(c) | cf. Figure 1(a) | cf. Figure 1(c) | cf. Figure 1(a) |
| **GF diameter, µm** | 11 | 11 | 10 | 10 |
| **silane coupling agent** | A1100 | A1100 | A1100 | A1100 |
| **A1** | amine | amine | amine | amine |
| **reactive polymer** | polyacrylic ac. | polyacrylic ac. | maleic anhydr. Copm | maleic anhydr. Copm |
| **A2** | carboxylic ac. | carboxylic ac. | anhydride | anhydride |
| **Matrix** | PA6 | PA6 | PA6 | PA6 |
| **B1** | amine | amine | amine | amine |
| **B2** | carboxylic ac. | carboxylic ac. | carboxylic ac. | carboxylic ac. |
| **salt additive** | Ca stearate | Ca stearate | Ca stearate | Ca stearate |
| **C** | Ca²⁺ stearate | Ca²⁺ stearate | Ca²⁺ stearate | Ca²⁺ stearate |
| **Un-notched Charpy** | | | | |
| **energy at 0% CaSt** | 78.4 | 78.4 | 93.6 | 93.6 |
| **energy at 0.4% CaSt** | 68.6 | 53.1 | 85.4 | 73.6 |
| **energy drop 0-0.4% CaSt** | -13% | -32% | -9% | -21% |
| **slope energy vs CaSt, kJ/m²/%CaSt** | -24.55 | -63.39 | -20.51 | -50.03 |
| | | | | |
| **Tensile** | | | | |
| **Tensile strength at 0% CaSt, MPa** | 175.6 | 175.6 | 184.4 | 184.4 |
| **Tensile strength at 0.4% CaSt, MPa** | 168.4 | 156.4 | 179.3 | 178.1 |
| **Tensile strength drop 0-0.4% CaSt, %** | -4% | -11% | -3% | -3% |
| **slope Tensile strength vs CaSt, MPa/%CaSt** | -18.1 | NA | -0.80 | -0.76 |
| | | | | |
| **Tensile strain at 0% CaSt, %** | 4.2 | 4.2 | 4.3 | 4.3 |
| **Tensile strain at 0.4% CaSt, %** | 3.8 | 2.5 | 4.1 | 3.1 |
| **Tensile strain drop 0-0.4% CaSt, %** | -10% | -40% | -5% | -28% |
| **slope tensile strain vs CaSt, %** / **%CaSt** | -1.00 | -4.22 | -0.49 | -2.84 |

The results presented comfort our assumption of the mechanism involved with mechanical pressure drops with addition of a salt additive to a fibre reinforced composite comprising a polycondensate in the matrix presented above, namely:
(a) neutralisation by the metallic cation of the salt additive of sizing reactive moieties, A1, A2, which thus become unavailable for reaction with first and/or second matrix reactive moieties, B1, B2 of the polycondensate polymer, and/or
(b) competition of the organic anion of the salt additive with the sizing reactive moieties, A1, A2, in reacting with first and/or second matrix reactive moieties, B1, B2 of the polymer, thus terminating polycondensation chain extension and preventing any reaction of said matrix reactive moieties with the sizing reactive moieties, A1, A2.

Establishing such model was the starting point for the inventors to arrive at the present invention, concluding that the negative effects observed by the addition of a salt to glass fibres and matrix could be substantially attenuated giving time to the sizing reactive moieties, A1, A2, to react with sufficient matrix reactive moieties, B1, B2, before the neutralization and competition processes described above would start. The substantial decrease in the slopes of the linear drop in mechanical properties observed when adding CaSt in samples produced by a process according to the present invention compared with samples produced with the prior art process (compare Examples 1&2 vs Comparative Examples 1&2).

## Claims

1. Process for the production of injection moulded glass fibre reinforced composites from extruded glass fibre reinforced pellets, said process comprising the following steps:
(A) Providing:
(a) Glass fibres (2) coated with a silane based sizing composition, said silane based sizing composition comprising at least one sizing reactive moiety, A1, A2, selected among a carboxylic group, an anhydride group, and epoxy group, an amine group or a isocyanate group,
(b)A thermoplastic matrix polycondensate (2) comprising a first matrix reactive moiety, B1, at a first end of the chain and a second matrix reactive moiety, B2, at a second end of the chain, said first and/or second matrix reactive moieties, B1, B2, being same or different and being capable of reacting with the at least one sizing reactive moiety, A1, A2, wherein B1, B2 are selected among an amine group, carboxylic group or hydroxyl group,
(c) A salt (3) selected among an internal lubricant and a nucleating agent comprising a salt reactive moiety, C, capable of reacting with the at least one sizing reactive moiety, A1, A2, and/or with the first or second matrix reactive moiety, B1, B2, said salt reactive moiety, C, being selected among,
• A metallic cation ,
• An organic portion having a functionality, f = 1, with a reactive moiety selected among the anionic form of a carboxylic group or a hydroxyl group, and
• An inorganic anion such as carbonate or sulphate,
(B) Blending the glass fibres, thermoplastic matrix polycondensate, and salt;
(C) Forming glass fibre reinforced pellets; and
(D) Injection moulding a composite part with a composition comprising the reaction
product of said glass fibres, thermoplastic matrix polycondesate and salt **Characterized in that**, the salt is added to a blend of thermoplastic matrix composite and glass fibres only after the first and/or second matrix reactive moieties, B1, B2, and the at least one sizing reactive moiety, A1, A2, are given time to react together at least partially.

2. Process according to claim 1, wherein the glass fibres and thermoplastic matrix polycondensate are blended upstream of an extruding screw chamber, and the salt is added downstream of said extruding screw chamber to produce glass fibre reinforced pellets comprising the reaction product of a blend of glass fibres, thermoplastic matrix polycondensate, and salt.

3. Process according to claim 1, wherein a master batch comprising the thermoplastic matrix polycondensate and salt is blended in a screw chamber of an injection moulding machine with pellets comprising the reactive product of glass fibres and thermoplastic matrix polycondensate.

4. Process according to any of claims 1 to 3, wherein,
• said at least one sizing reactive moiety, A1, belongs to a silane coupling agent, preferably selected among aminosilanes and epoxysilanes, and/or
• said at least one sizing reactive moiety, A2, belongs to a reactive polymer of functionality, f ≥ 2, comprising at least two such sizing reactive moieties, A2.

5. Process according to the preceding claim, wherein said reactive polymer is selected among an epoxy resin based on bisphenol-A or bisphenol-F, an epoxy phenol novolac (EPN), an epoxy cresol novolac (ECN), a (co-)polymer comprising acrylic and/or methacrylic acid groups, a copolymer of maleic acid, a (co-)polymer grafted with maleic anhydride, isocyanate cross-linkers, polyvinylamine and polyethyleneimine, and wherein said reactive polymer is preferably present in an amount comprised between 0.1 and 0.6 wt.%, with respect to the total weight of the glass fibres.

6. Process according to any of the preceding claims, wherein the thermoplastic matrix polycondensate is:
(A) a polyamide, with first and second matrix reactive moieties, B1, B2, being an amine group and a carboxylic acid group, respectively, or
(B) a polyester, preferably polyethylene terephthalate or polybutylene terephthalate, with first and second matrix reactive moieties, B1, B2, being a hydroxyl group and a carboxylic acid group, respectively, and
wherein said polycondenssate is preferably present in an amount comprised between 40 and 85 wt.%, with respect to the total weight of the composite, and said glass fibres are preferably present in an amount comprised between 15 and 60 wt.%, with respect to the total weight of the composite.

7. Process according to any of the preceding claims, wherein the salt is an internal lubricant, preferably a metal soap such as calcium-, zinc-, magnesium-, or aluminum-stearate or montanate, preferably the internal lubricant is calcium stearate or montanate, and wherein said salt is preferably present in an amount comprised between 0.05 and 0.4 wt.%, with respect to the total weight of the composite, preferably between 0.2 and 0.35 wt.%.

8. Process according to any of claims 1 to 4, wherein the salt is a nucleating agent, preferably preferably selected among slaked lime (Ca(OH₂)₂), calcium benzoate, sodium benzoate, sodium o-chlorobenzoate, calcium carbonate, and wherein said salt is preferably present in an amount comprised between 0.1 and 5 wt.%, with respect to the total weight of the composite, preferably between 0.8 and 1.2 wt.%.

9. Process according to any of the preceding claims, wherein the mechanical properties of a glass fibre reinforced composite thus produced has higher mechanical properties than a composite material with same components and amounts, wherein the thermoplastic matrix polycondesate and salt are blended prior to adding the glass fibres, as follows:
(A) At least 10% higher notched or un-notched charpy values measured according to ISO 179/ 1 eA(f) and ISO 179/ 1eU, respectively, or
(B) At least 5% higher tensile strength measured according to ISO 527, the tests being carried out on samples dry as moulded (DAM) or after hydrolysis ageing for a given time at a temperature comprised between 100 and 130 °C, in presence of either water or water and glycol.

10. Glass fibre reinforced composite obtained by a process according to any of claims 1 to 9.

11. Process for producing glass reinforced pellets, said process comprising the following steps:
(A) Providing glass fibres, a thermoplastic matrix polycondensate, and a salt as defined in any of claims 1 to 6,
(B) blending the glass fibres and thermoplastic matrix polycondensate upstream of a an extruding screw chamber;
(C) blending the salt to the blend of glass fibres and thermoplastic matrix polycondensate obtained in the preceding step, downstream of said extruding screw chamber;
(D) extruding and chopping a profile of glass fibre reinforced thermoplastic matrix polycondensate comprising said organic salt to form glass fibre reinforced pellets.

12. Glass fibre reinforced pellets obtained by a process according to the preceding claim.
